(19) Europäisches Patentamt

European Patent Office

Office européen des brevets

(11) **EP 0 671 610 B1**

(12) **EUROPEAN PATENT SPECIFICATION**

(45) Date of publication and mention
of the grant of the patent:
**24.05.2000 Bulletin 2000/21**

(51) Int. Cl.[7]: **G01H 1/00**

(21) Application number: **95103201.0**

(22) Date of filing: **06.03.1995**

(54) **Apparatus for diagnosing sound source and vibration source**

Gerät zur Diagnose von Schall- und Schwingungsquellen

Dispositif pour diagnostiquer une source sonore et une source de vibration

(84) Designated Contracting States:
**DE FR GB IT**

(30) Priority: **08.03.1994 JP 3693194**

(43) Date of publication of application:
**13.09.1995 Bulletin 1995/37**

(73) Proprietor:
**BRIDGESTONE CORPORATION
Tokyo 104-0031 (JP)**

(72) Inventors:
• **Kazutomo, Murakami
Yokohama-shi, Kanagawa (JP)**
• **Keiichiro, Mizuno
Tokyo (JP)**
• **Hirokazu, Kudoh
Tokyo (JP)**

(74) Representative:
**Dreiss, Fuhlendorf, Steimle & Becker,
Patentanwälte
Postfach 10 37 62
70032 Stuttgart (DE)**

(56) References cited:
**EP-A- 0 555 786          JP-A- 5 026 722
US-A- 4 862 506**

• **INTER-NOISE 88, vol. 2, 30 August 1988 - 1
September 1988 AVIGNON FRANCE, pages 979-
981, LINDQVIST ET AL. 'System optimization for
active control of sound fields in rooms'**

**Description**

BACKGROUND OF THE INVENTION

Field of the Invention:

The present invention relates to a method for and an apparatus for diagnosing a sound source and a vibration source, and more particularly to a method for and an apparatus for diagnosing a sound source and a vibration source which, in a transmitting system in which one or a plurality of sound sources or vibration sources constitute causes of sounds or vibrations at an evaluation point, make it possible to visually and quantitatively diagnose the sound sources or vibration sources contributing largely to the evaluation point, and can be used in making effective improvements.

Description of the Related Art:

Conventionally, as a method of analyzing the contribution of sound sources or vibration sources to an evaluation point, a method has been proposed in which, in a frequency domain, correlational components are determined from a transfer function between the respective sound sources or vibration sources and the evaluation point, and the rates of contribution of the sound sources or vibration sources to the evaluation point are determined from these correlational components.

Further, in recent years, a technique has been proposed for diagnosing the contribution of sound sources or vibration sources by using adaptive digital filters in a time domain (Japanese Patent Application Laid-Open No. 5-26722).

However, with the above-described conventional method of analyzing contribution in the frequency domain, only amplitude information is used, and phase information is not considered. Therefore, if there are strong correlations among inputs, analysis becomes difficult. In addition, it takes time in analysis, so that it is impossible to obtain results instantly, and steady data for a long time is required.

On the other hand, with the above-described conventional method of analyzing contribution in the time domain, analysis in operating conditions, i.e., in real time, becomes possible. In consequence, however, only the time waveform is obtained, and since the rates of contribution are evaluated from the magnitude of the amplitude of the time waveform, it is possible to determine only qualitative and approximate rates of contribution although they are determined in real time. Thus, there is a problem in that it is impossible to evaluate the degrees of instantaneous, quantitative contribution (contribution rates).

SUMMARY OF THE INVENTION

The present invention has been device in view of the above-described circumstances, and its object is to provide an apparatus for diagnosing a sound source and a vibration source, which have higher practical values by making it possible to evaluate a rate of quantitative contribution in real time.

In accordance with the present invention, there is provided an apparatus for diagnosing a rate of contribution of a sound source or a vibration source, comprising: means including a sensor for detecting sounds or vibrations at a predetermined position in the form of an analog value and an analog-digital converting circuit for converting the analog value into a digital value, or including a sensor for detecting sounds or vibrations at a predetermined position in the form of a digital value; a plurality of filters each adapted to perform digital filtering by using a filter factor and one of a plurality of digital values generated by delaying the respective present digital value a plurality of times; changing means for changing at least one of the filter factors such that a difference between a total sum of results of digital filtering and a targeted value becomes minimum; and a contribution-rate computing circuit for computing the rate of contribution to an evaluation point by using outputs of the plurality of filters within a predetermined time when the difference becomes minimum.

In the present invention, the analog value of sounds or vibration at a predetermined position detected by an analog sensor is converted into a digital value by the analog-digital converting circuit for converting the analog value into a digital value, or sounds or vibration at a predetermined position are detected directly in the form of a digital value by a digital sensor. Each of the filters performs digital filtering by using a filter factor and one of the plurality of digital values generated in the past by delaying the digital value. The changing means changes at least one of the filter factors such that the difference between the filter output and the targeted value becomes minimum, and the contribution-rate computing circuit computes the rate of contribution to the evaluation point by using outputs of the plurality of filters within a predetermined time when the difference becomes minimum. This rate of contribution is displayed on a display unit.

Thus, in the present invention, since the rate of contribution of one sound source or one vibration source is computed and displayed, it is possible to evaluate at a glance the rate of contribution of the sound source or the vibration source to the evaluation point.

As described above, in accordance with the present invention, it is possible to obtain an advantage in that, in a complicated acoustic or vibration system, it is possible to evaluate at a glance the rate of contribution of the sound source or vibration source to an evaluation point in real time and quantitatively.

The above and other objects, features and advantages of the present invention will become more apparent from the following detailed description of the invention when read in conjunction with the accompanying drawings.

BRIEF DESCRIPTION OF THE DRAWINGS

Fig. 1 is a block diagram illustrating an apparatus for analyzing contribution of noise in a vehicle compartment illustrating the present invention;

Fig. 2 is a block diagram illustrating the details of an adaptive-filter computing unit shown in Fig. 1;

Fig. 3 is a block diagram schematically illustrating an adaptive digital filter shown in Fig. 1;

Fig. 4 is a schematic diagram of the adaptive-filter computing unit shown in Fig. 1;

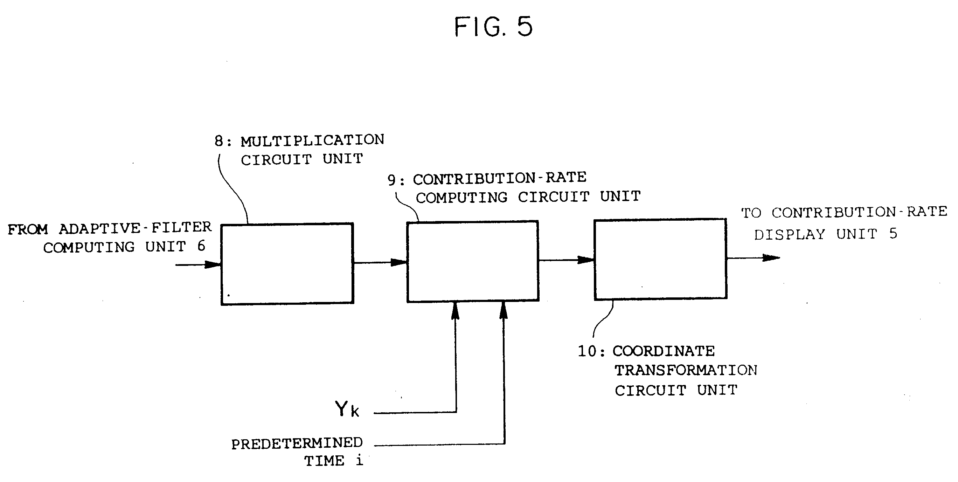

Fig. 5 is a block diagram of a contribution-rate computing circuit unit shown in Fig. 1;

Fig. 6 is a graph illustrating the results of an output with time taken as the abscissa;

Fig. 7 is a bar graph illustrating the results of an output;

Fig. 8 is a graph illustrating the results of an output with the engine speed taken as the abscissa;

Fig. 9 is a graph illustrating the results of an output with the engine speed taken as the abscissa;

Fig. 10 is a schematic diagram of the adaptive-filter computing unit in the case of a single input in accordance with the present invention; and Fig. 11 is a graph illustrating the results of an output in a conventional example.

DESCRIPTION OF THE PREFERRED EMBODIMENT

Referring now to the accompanying drawings, a detailed description will be given to illustrate an embodiment of the present invention in the light of the disclosure of JP-A-5 026 722. In this embodiment, the present invention is applied to the analysis of contribution of noise in a vehicle compartment.

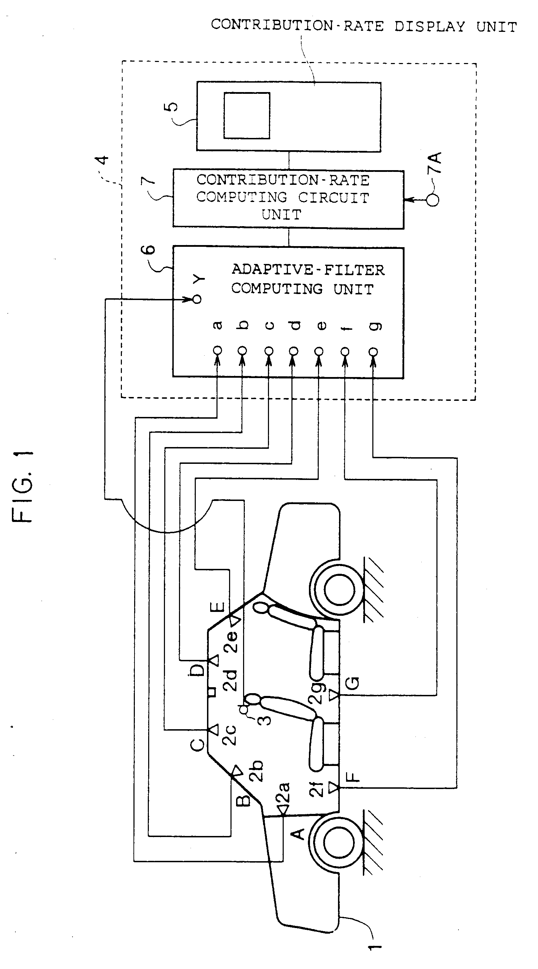

In general, when countermeasures are devised for reducing noise in a vehicle compartment for the driver or occupant of the vehicle when the vehicle is running, it is very important to determine the contribution of sounds or vibrations, whose sound sources or vibration sources are major panels A to G in the compartment of a vehicle 1 shown in Fig. 1, to the noise close to the driver's or occupant's ears. This is because it is possible to implement an effective countermeasure if a means is provided by covering the portions (panels) in the order of the decreasing rate of contribution with a vibration-damping material, a sound-absorbing material or the like.

The apparatus for diagnosing the contribution of a sound source or a vibration source in this embodiment is comprised of a plurality of vibration sensors 2a to 2g constituted by acceleration sensors for detecting sounds at the sound sources or vibrations at the vibration sources in the form of analog values, as well as a microphone 3 for detecting sounds at an evaluation point. The vibration sensors 2a to 2g are respectively attached to the major panels A to G in the vehicle compartment, which are sound sources or vibration sources, while the microphone 3 is disposed at a position in the vicinity of the ears of the driver on a front seat.

The vibration sensors 2a to 2g and the microphone 3 are connected to a contribution analyzing device 4. The contribution analyzing device 4 is comprised of an adaptive-filter computing unit 6, a contribution-rate computing circuit unit 7 including a personal computer or the like for computing the rate of contribution, and a contribution-rate display unit 5 constituted by a CRT or the like. A changing means 7A, such as a keyboard, for inputting intervals for computing the rate of contribution, and the scale or coordinates of a graph is connected to the contribution-rate computing circuit unit 7.

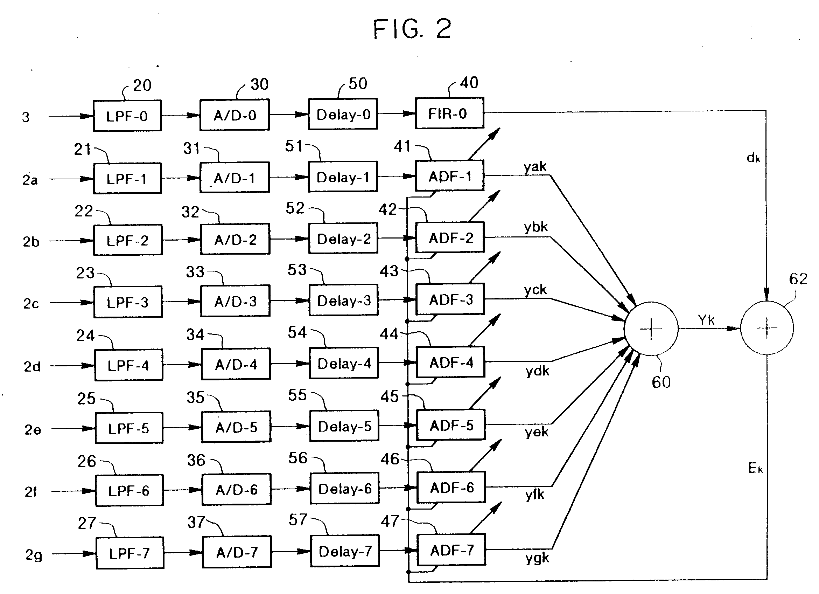

As shown in Fig. 2, the adaptive-filter computing unit 6 is comprised of low-pass filters (LPFs) 20 to 27, i.e., anti-aliasing filters respectively connected to the microphone 3 and the vibration sensors 2a to 2g; A/D converters 30 to 37 connected respectively to the low-pass filters 20 to 27 to convert analog values into digital values at predetermined periods; delay circuits (Delays) 50 to 57 connected respectively to the A/D converters 30 to 37 to output the signals inputted thereto by delaying them predetermined durations; adaptive digital filters (ADFs) 41 to 47 connected respectively to the delay circuits 51 to 57 to perform digital filtering at the same periods as the A/D converters; an adder circuit 60 connected to the adaptive digital filters 41 to 47 to compute the total sum of the outputs from the adaptive digital filters 41 to 47; a band-pass filter (FIR) 40 connected to the delay circuit 50; and an adder circuit 62 for computing the difference between the output from the adder circuit 60 and the output from the band-pass filter 40 and for outputting a residual signal $E_k$. Output terminals of the adder circuit 60 are connected to the adaptive digital filters 41 to 47, and output terminals of the adaptive digital filters 41 to 47 are connected to the contribution-rate computing circuit unit 7.

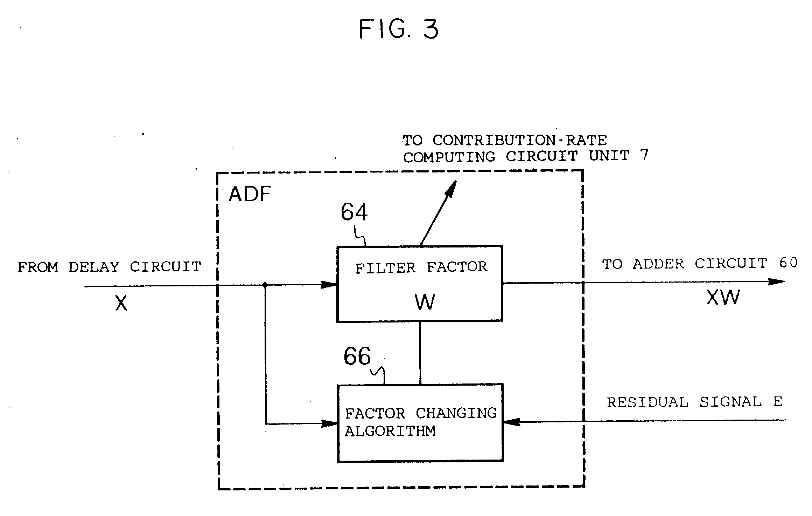

Each of the above-described adaptive digital filters is constituted by hardware such as a digital signal processor (DSP). As schematically shown in Fig. 3, each of the adaptive digital filters can be composed of a block 64 constituted by an FIR-type, IIR-type, or lattice-type digital filter for effecting digital filtering and a block 66 for updating a filter factor so that the residual signal becomes minimum by means of a least mean square (LMS) algorithm, the Newton's method, or the steepest descent method, which are ordinary filter-factor updating algorithms. Incidentally, although the adaptive digital filters are preferably configured by hardware as described above in the light of high-speed computation, the adaptive digital filters may be configured by software.

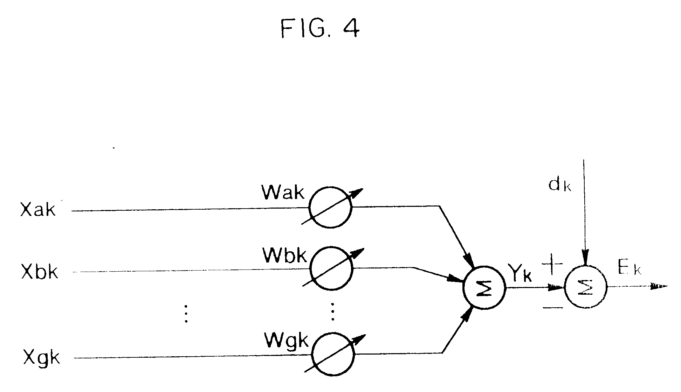

The adaptive-filter computing unit 6 can be expressed as schematically shown in Fig. 4, adds digital filtering values in accordance with Formula (1) below, and outputs a total sum $Y_k$ at a timing k (present time) from the adder circuit 60.

$$Y_k = X_{ak}W_{ak} + X_{bk}W_{bk} + X_{ck}W_{ck} + ... + X_{gk}W_{gk} \tag{1}$$

where $X_{ak}$, $X_{bk}$, $X_{ck}$, ..., $X_{gk}$ are inputs of digital values at the timing k to the respective adaptive digital filters 41 to 47, and $W_{ak}$, $W_{bk}$, $W_{ck}$, ..., $W_{gk}$ are filter factors of the respective adaptive digital filters 41 to 47 at the timing k.

The residual signal $E_k = d_k - Y_k$, which is the difference between an output $d_k$ of the band-pass filter 40 at the timing k and the total sum $Y_k$, is outputted from the adder circuit 62. Then, in the block 66, the filter factor is updated by using the LMS algorithm or the like so as to be set to a filter factor at a timing k + 1 such that the residual signal $E_k$ becomes minimum (e.g., 0).

The contribution-rate computing circuit unit 7 is composed of a plurality of contribution-rate computing circuits connected respectively to the adaptive digital filters 41 to 47. Each of the contribution-rate computing circuits is comprised of a multiplication circuit unit 8 for computing a square of the input signal; a contribution-rate computing circuit unit 9 for computing a square mean after adding the outputs of the multiplication circuit unit 8 within a predetermined time i (timing k - i to timing k) and for computing the contribution rate from this square mean; and a coordinate transformation circuit unit 10 for transforming coordinates to give a display corresponding to coordinates and a scale which have been designated. If $Ya_k = X_{ak}W_{ak}$, a square means value $Ya_{ab}$ with respect to the panel A within the predetermined time i can be expressed as shown in Formula (2) below by using digital filtering values within the predetermined time i.

$$Ya_{ab} = (Ya_k{}^2 + Ya_{k-1}{}^2 + Ya_{k-2}{}^2 + ... + Ya_{k-i}{}^2)/(i + 1) \tag{2}$$

Similarly, if $Yb_k = X_{bk}W_{bk}$, $Yc_k = W_{ck}W_{ck}$, ..., $Yg_k = X_{gk}W_{gk}$, square means values with respect to the panels B to G can be expressed as follows:

$$Yb_{ab} = (Yb_k{}^2 + Yb_{k-1}{}^2 + Yb_{x-2}{}^2 + ... + Yb_{k-i}{}^2)/(i + 1)$$

$$Yc_{ab} = (Yc_k{}^2 + Yc_{k-1}{}^2 + Yc_{k-2}{}^2 + ... + Yc_{k-i}{}^2)/(i + 1)$$

$$\vdots$$

$$Yg_{ab} = (Yg_k{}^2 + Yg_{k-1}{}^2 + Yg_{k-2}{}^2 + ... + Yg_{k-i}{}^2)/(i + 1)$$

$$... \quad (3)$$

In addition, the contribution rates become $Ya_{ab}/Y_k$, $Yb_{ab}/Y_k$, ..., $Yg_{ab}/Y_k$.

Next, a description will be given of the operation of this embodiment. The analog detection signals detected by the vibration sensors 2a to 2g are inputted respectively to the low-pass filters 21 to 27 where high-frequency components are removed. The output signals from the low-pass filters 21 to 27 are respectively inputted to the A/D converters 31 to 37 so as to be subjected to A/D conversion at predetermined periods, and are outputted as digital signals. These digital signals are inputted to the delay circuits 51 to 57, and after they are delayed, the digital signals are inputted to the adaptive filters 41 to 47 so as to be subjected to digital filtering at the same periods as those of the A/D converters. Their output signals $Ya_k$ to $Yg_k$ are respectively inputted to the adder circuit 60.

Meanwhile, the detection signal (target signal) from the microphone 3 is inputted to the low-pass filter 20 which is an anti-aliasing filter, and its output signal is inputted to the A/D converter 30 so as to be converted into a digital signal at a predetermined period and is outputted therefrom. This digital signal, after passing through the delay circuit 50, is inputted to the band-pass filter 40 for restricting an analytical frequency band, and its output signal $d_k$ is inputted to the adder circuit 62.

Here, by using the aforementioned delay circuits 51 to 57, it is possible to compensate for the delay of the signal due to its passage through the band-pass filter 40 for restricting the analytical frequency band. In other words, it becomes possible to ensure the simultaneity in the time axis between the signal $d_k$ and the signals $Ya_k$ to $Yg_k$, and to probe the sound sources or vibration sources. In order to ensure the simultaneity of the signals in the time axis, it is preferable to use the delay circuits 51 to 57, but, ordinarily, there are many cases where the analysis of contribution is possible without the use of the delay circuits 51 to 57. Incidentally, the delay circuit 50 is used for checking the performance using simulation or a model signal or checking the operation of the circuits or for other similar purposes, and may not be used ordinarily.

The outputs from the respective blocks of the adaptive digital filters 41 to 47 are inputted to the contribution-rate computing circuit unit 7, which computes the rates of contribution by using the output signals $Ya_k$ to $Yg_k$ from the adaptive digital filters and the total sum $Y_k$, as described above.

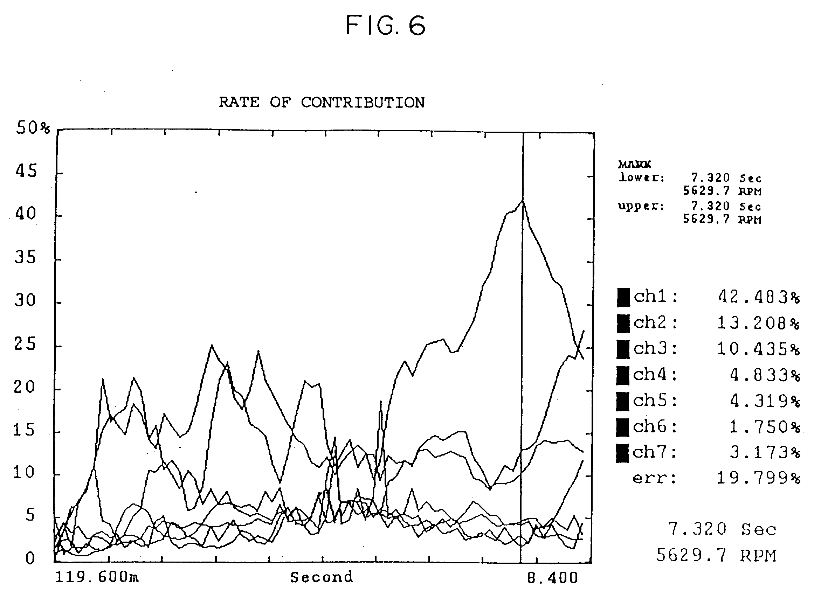

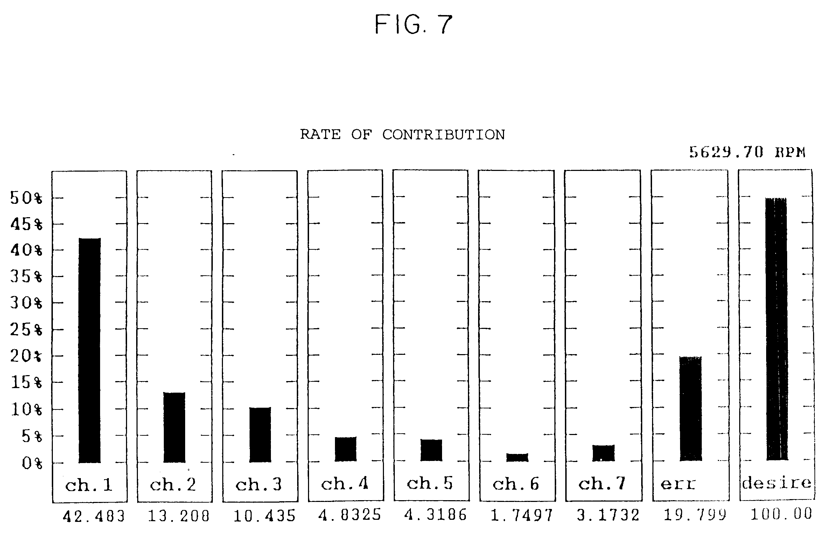

Then, these rates of contribution are displayed in real time as graphs as shown in Figs. 6, 8, and 9, or as a bar graph such as shown in Fig. 7. It should be noted that, in these graphs, ch1 to ch7 denote the values of the panels A to G, respectively, err denotes the residual, and desire denotes a target signal.

Since the filter factor is changed by the block 66 such that the residual signal $E_k$ becomes minimum, the rate of contribution when the residual has finally converged to a predetermined value is computed and displayed, i.e., the rate of contribution to an evaluation point is computed and displayed by using filter outputs within a predetermined time when the residual becomes minimum.

In the contribution-rate computing unit 7, the display time interval of the bar graph display can be adjusted by changing the mean time interval, and the confirmation of the results can be facilitated by designating a short mean time interval with respect to a signal which changes fast, and by designating a long mean time interval with respect to a steady signal. In addition, the confirmation of the results can be further facilitated by making variable a full scale of 50%, 100% or the like.

Although, in the above, the rates of contribution were computed by using square mean values, the rates of contribution may be computed by using mean values of $Ya_k$ to $Yg_k$ as follows:

$$(Ya_k + Ya_{k-1} + Ya_{k-2} + \ldots + Ya_{k-i})/\{(i + 1) \cdot Y_k\}$$

$$(Yb_k + Yb_{k-1} + Yb_{k-2} + \ldots + Yb_{k-i})/\{(i + 1) \cdot Y_k\}$$

$$\vdots$$

$$(Yg_k + Yg_{k-1} + Yg_{k-2} + \ldots + Yg_{k-i})/\{(i + 1) \cdot Y_k\}$$

$$\ldots (4)$$

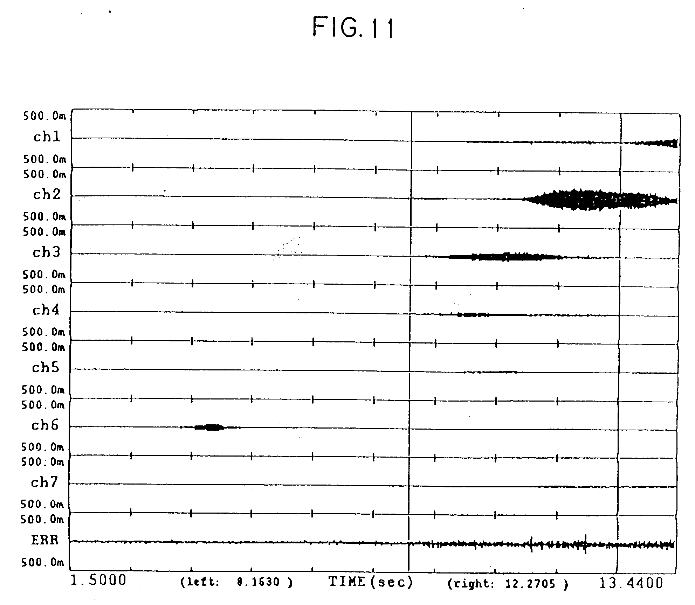

Fig. 11 shows the results of analysis of contribution during fixed-speed running (50 km/h) by the conventional technique and apparatus for analyzing contribution in the time domain. From this diagram, it is possible to evaluate a panel having a large rate of qualitative contribution, but it is impossible to evaluate the degree of quantitative contribution. The same applies to the results of analyzing contribution during accelerated running, and it is possible to evaluate a time-series change in the qualitative contribution, but it is impossible to evaluate the degree of quantitative contribution.

Fig. 7 shows the results of output during fixed-speed running in accordance with the above-described embodiment. From the bar graph shown therein, it is possible to ascertain at a glance the rates of quantitative contribution of the vibrations of the respective panels to the in-compartment noise at a predetermined engine speed (5629.70 rpm, this value is changeable).

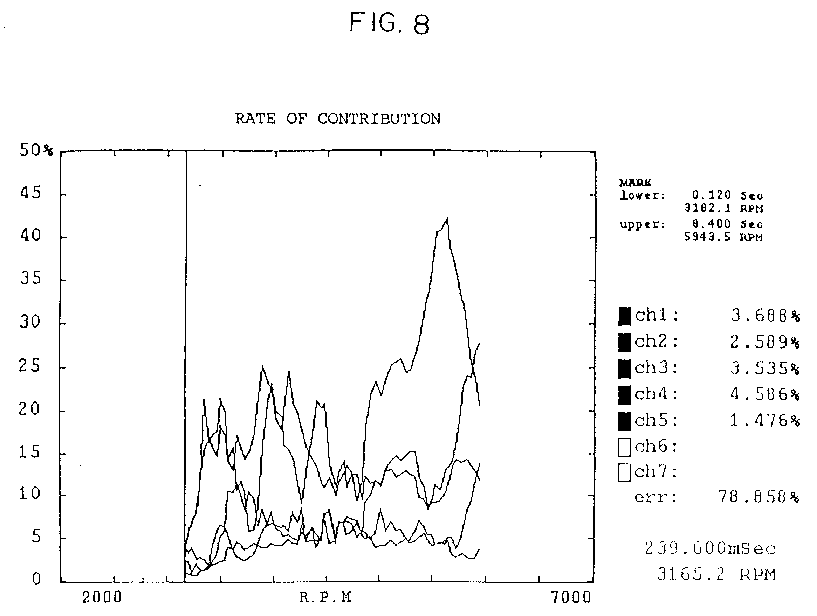

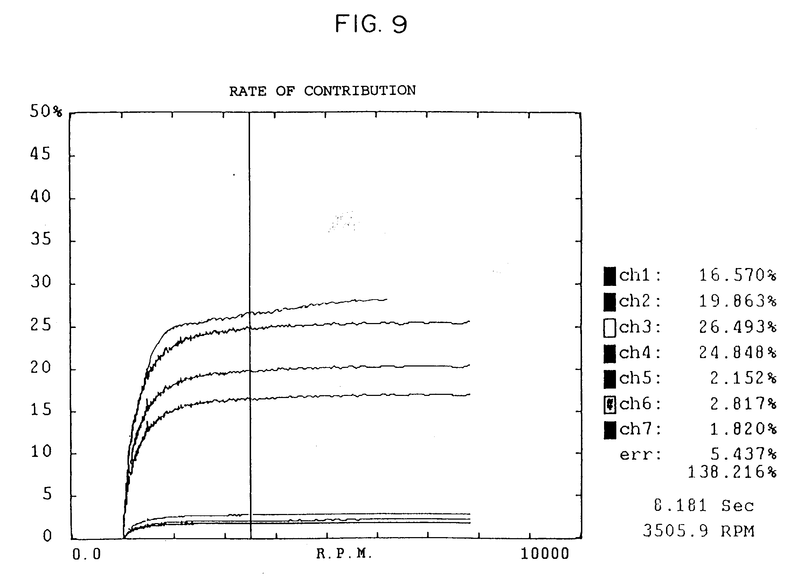

Figs. 6 and 8 shows the results of output by the apparatus for analyzing contribution in accordance with the above-described embodiment. In the graph shown in Fig. 6, the abscissa shows time, while the ordinate shows the rate of contribution. In the graph shown in Fig. 8, the abscissa shows the engine speed, while the ordinate shows the rate of contribution. From these graphs, it is possible to quantitatively determine the time (or engine speed) dependence of of the rate of contribution of each panel. Furthermore, from each of these graphs, it is possible to display a bar graph, similar to the one shown in Fig. 7, at an arbitrary time (or engine speed). Additionally, Fig. 9 is a graph in which the scale is changed.

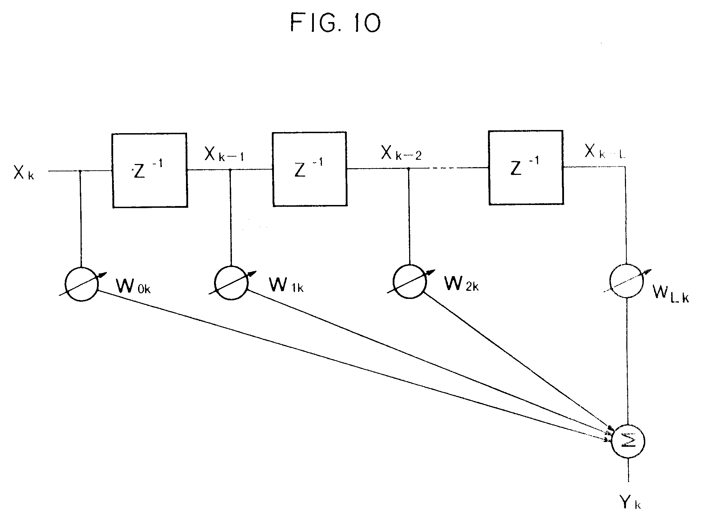

In the above, a description has been given by citing an example in which a multiplicity of signals are inputted to the adaptive-filter computing unit, the present invention, however, is applied to a case where a single signal is inputted. The adaptive-filter computing unit for a single input can be expressed by using L delay circuits, as schematically shown in Fig. 10, in which case the output of the adder circuit becomes as follows:

$$Y_k = X_k W_{0k} + X_{k-1} W_{1k} + X_{k-2} W_{2k} + ... + X_{k-L} W_{Lk} \qquad (5)$$

Since the other arrangements are similar to those described above, a description thereof will be omitted.

As described above, in the embodiment of the invention, the contribution of sounds or vibrations to an evaluation point, including phase information, is diagnosed by the use of adaptive digital filters, short-time data and data which changes fast, such as transient data, can also be handled easily, and the rate of contribution can be determined in real time and quantitatively. Thus the practical values of the technique and apparatus in accordance with the present invention are very high. Additionally, since the degree of contribution can be evaluated in real time and quantitatively as compared with the conventional masking method, method of analyzing contribution in the frequency domain, and method of analyzing contribution in the time domain, the technique and apparatus become very effective.

For this reason, it becomes possible to adopt a countermeasure against noise and vibrations efficiently and accurately, and since the rate of contribution is determined quantitatively, it becomes possible to quantitatively estimate the effect of the countermeasure to a certain extent.

In addition, the present invention is applicable to cases where sound sources or vibration sources having high causal relationships are selected when active control of noise and vibrations is carried out, and cases where the effect of active control is quantitatively estimated.

In this embodiment, there are cases where higher-accuracy results can be obtained by performing filtering processing with respect to sounds or vibrations (input signals) detected by a sensor, by using low-pass filters, high-pass filters, bandpass filters, or the like before performing digital filtering processing, so as to clearly restrict a frequency band subject to analysis.

In addition, in a case where the frequency band subject to analysis changes over time in synchronism with the engine speed or the like, it is an effective analyzing method to analyze contribution by using a tracking filter synchronized with the engine speed.

In this embodiment, signals detected by a microphone and amplified by a noise level meter, an amplifier, or the like are generally used for sounds, while signals detected by a displacement sensor, a velocity sensor, an acceleration sensor, or the like and amplified by an amplifier are generally used for vibrations. Also, it is possible to alternatively use electric signals which are completely correlated with sounds or vibrations.

In this embodiment, it is possible to obtain a frequency characteristic of the rate of contribution by converting an output signal of filtering to a frequency domain by means of FFT or the like.

Furthermore, the rates of contribution of respective inputs in the frequency domain can be determined by dividing an output signal of filtering by the total sum of frequency spectra or power spectra outputted by a plurality of filters by using frequency spectra or power spectra obtained by averaging in a predetermined time.

In addition, by converting each digital filter factor into the frequency domain by means of FFT or the like, it is possible to determine a transfer characteristic between each input signal (sound or vibration) and an evaluation-point signal (sound or vibration), thereby making it possible to obtain effective information concerning a countermeasure against noise and vibrations or a design for reduced noise.

Although in the above a description has been given of an example in which sounds or vibrations, after being detected in the form of an analog value, are converted into a digital value, it is possible to use a sensor for detecting the sounds or vibrations directly in the form of a digital value.

In addition to the above-described embodiment, the present invention is applicable to problems in various fields, such as the problem of noise and vibrations of general machines and equipment, the problem of noise and vibrations of vehicles, the identification of sound sources and vibration sources in the railroad noise and vibrations, the problem of noise and vibrations of office automation (OA) equipment, and the problem of noise and vibrations of building structures, and the like.

**Claims**

1. An apparatus for diagnosing a rate of contribution of a sound source or a vibration source, comprising:

   means including a sensor (2a) for detecting sounds or vibrations at a predetermined position in the form of an analog value and a analog-digital converting circuit (31) for converting the analog value into a digital value, or including a sensor (2a) for detecting sounds or vibrations at a predetermined position in the form of a digital value;

   a plurality of filters (41 to 47) each adapted to perform digital filtering by using a filter factor ($W_{0k}$, $W_{1k}$, $W_{2k}$, ...) and one of a plurality of digital values ($X_k$, $X_{k-1}$, $X_{k-2}$, ...) generated by delaying the respective present digital value ($X_k$) a plurality of times;

   changing means for changing at least one of the filter factors ($W_{0k}$, $W_{1k}$, $W_{2k}$, ...) such that a difference between a total sum of results ($Y_k$) of digital filtering and a targeted value ($d_k$) becomes minimum; and a contribution-rate computing circuit (7) for computing the rate of contribution to an evaluation point by using outputs of said plurality of filters (41 to 47) within a predetermined time when the difference becomes minimum.

2. An apparatus for diagnosing a rate of contribution of a sound source or a vibration source according to Claim 1, wherein said contribution-rate computing circuit (7) computes as the rate of contribution to the evaluation point a ratio of a mean value of the respective outputs of said plurality of filters (41 to 47) within the predetermined time to a total sum of the outputs of said plurality of filters within the predetermined time when the difference becomes minimum.

3. An apparatus for diagnosing a rate of contribution of a sound source or a vibration source according to Claim 1, wherein said contribution-rate computing circuit (7) computes as the rate of contribution to the evaluation point a ratio of a square mean value of respective outputs of said plurality of filters (41 to 47) within the predetermined time to a total sum of outputs of said plurality of filters within the predetermined time when the difference becomes minimum.

4. An apparatus for diagnosing a rate of contribution of a sound source or a vibration source according to Claim 1, wherein the targeted value ($d_k$) is an output of another analog-digital converting circuit (30) for converting into a digital value an analog value detected by a further sensor (3) for detecting sounds or vibration at the evaluation point in the form of an analog value, or an output of a further sensor (3) for detecting sounds or vibrations at the evaluation point in the form of a digital value.

5. An apparatus for diagnosing a rate of contribution of a sound source or a vibration source according to Claim 4, wherein the targeted value ($d_k$) is outputted via a band-pass filter (40) for restricting an analytical frequency band.

6. An apparatus for diagnosing a rate of contribution of a sound source or a vibration source according to claim 5, further comprising a plurality of delay circuits (50 to 57) for compensating for delay due to passage through said band-pass filter (40).

**Patentansprüche**

1. Vorrichtung zur Diagnose einer Beitragsrate einer Schallquelle oder einer Schwingungsquelle, umfassend:

   Mittel, welche einen Sensor (2a), um Schall oder Schwingungen an einer vorbestimmten Position in Form eines Analogwertes zu erfassen, und einen Analog-Digital-Umsetzer-Schaltkreis (31), um einen analogen Wert in einen digitalen Wert umzusetzen, oder einen Sensor (2a), um Schall oder Schwingungen an einer vorbestimmten Position in Form eines digitalen Signals zu erfassen, enthalten;

   eine Vielzahl von Filtern (41 bis 47), von denen jedes angepaßt ist, eine Digitalfilterung unter Verwendung eines Filterfaktors ($W_{0k}$, $W_{1k}$, $W_{2k}$, ...) und ein von einer Vielzahl von Digitalwerten ($X_k$, $X_{k-1}$, $X_{k-2}$, ...) durchzuführen, welche durch mehrmaliges Verzögerung des jeweiligen Digitalwertes ($X_k$) erzeugt werden;

   Änderungsmittel, um zumindest einen der Filterfaktoren ($W_{0k}$, $W_{1k}$, $W_{2k}$, ...) zu ändern, so daß eine Differenz zwischen einer Gesamtsumme der Ergebnisse ($Y_k$) einer digitalen Filterung und einem Zielwert minimal wird;

und einen Beitragsraten-Rechenschaltkreis (7), um die Beitragsrate zu einem Bewertungspunkt durch Nutzung von Ausgängen der Vielzahl von Filtern (41 bis 47) innerhalb einer vorbestimmten Zeit, wenn die Differenz minimal wird, zu berechnen.

2. Vorrichtung zur Diagnose einer Beitragsrate einer Schallquelle oder einer Schwingungsquelle nach Anspruch 1, bei dem der Beitragsraten-Rechenschaltkreis (7) als die Beitragsrate zu dem Bewertungspunkt ein Verhältnis eines Mittelwertes der jeweiligen Ausgänge der Vielzahl von Filtern (41 bis 47) innerhalb der vorbestimmten Zeit zu einer Gesamtsumme der Ausgänge der Vielzahl von Filtern (41 bis 47) innerhalb der vorbestimmten Zeit, wenn die Differenz minimal wird, berechnet.

3. Vorrichtung zur Diagnose einer Beitragsrate einer Schallquelle oder einer Schwingungsquelle nach Anspruch 1, bei dem der Beitragsraten-Rechenschaltkreis (7) als die Beitragsrate zu dem Bewertungspunkt ein Verhältnis eines quadratischen Mittelwertes der jeweiligen Ausgänge der Vielzahl von Filtern (41 bis 47) innerhalb der vorbestimmten Zeit zu einer Gesamtsumme der Ausgänge der Vielzahl von Filtern innerhalb der vorbestimmten Zeit, wenn die Differenz minimal wird, berechnet.

4. Vorrichtung zur Diagnose einer Beitragsrate einer Schallquelle oder einer Schwingungsquelle nach Anspruch 1, bei welcher der Zielwert ($d_k$) ein Ausgang eines anderen Analog-Digital-Umsetzers-Schaltkreises (30), um in einen Digitalwert einen Analogwert umzusetzen, der von einem weiteren Sensor (3) zum Erfassen von Schall oder Schwingungen am Bewertungspunkt in Form eines Analogwertes erfaßt wird, oder ein Ausgang eines weiteren Sensors (3), um Schall oder Schwingungen am Bewertungspunkt in Form eines Digitalwertes zu erfassen, ist.

5. Vorrichtung zur Diagnose einer Beitragsrate einer Schallquelle oder einer Schwingungsquelle nach Anspruch 4, bei welcher der Zielwert ($d_k$) über ein Bandpaßfilter (40) zum Begrenzen eines analytischen Frequenzbandes ausgegeben wird.

6. Vorrichtung zur Diagnose einer Beitragsrate einer Schallquelle oder einer Schwingungsquelle nach Anspruch 5, welche weiterhin eine Viellzahl von Verzögerungsschaltkreisen (50 bis 57) zum Kompensieren der Verzögerung aufgrund des Durchgangs durch den Bandpaßfilter (40) umfaßt.

**Revendications**

1. Appareil de diagnostic d'un taux de contribution d'une source acoustique ou d'une source de vibrations, comprenant :

   un dispositif comprenant un capteur (2a) de détection de sons ou de vibrations à une position prédéterminée, sous forme d'une valeur analogique, et un circuit (31) de conversion analogique-numérique destine à transformer la valeur analogique en une valeur numérique, ou comprenant un capteur (2a) de détection des sons ou vibrations à une position prédéterminée sous forme d'une valeur numérique,
   plusieurs filtres (41 à 47) destinés chacun à exécuter un filtrage numérique par utilisation d'un facteur de filtrage ($W_{0k}$, $W_{1k}$, $W_{2k}$, ...) et de l'une de plusieurs valeurs numériques ($X_k$, $X_{k-1}$, $X_{k-2}$, ...) créées par retard de la présente valeur numérique respective ($X_k$) plusieurs fois,
   un dispositif de changement de l'un au moins des facteurs de filtrage ($W_{0k}$, $W_{1k}$, $W_{2k}$, ...) de manière qu'une différence entre une somme totale des résultats ($Y_k$) de filtrage numérique et une valeur cible ($d_k$) devienne minimale, et un circuit (7) de calcul du taux de contribution en un point d'évaluation par utilisation des signaux de sortie desdits filtres (41 à 47) pendant un temps prédéterminé lorsque la différence devient minimale.

2. Appareil de diagnostic d'un taux de contribution d'une source acoustique ou d'une source de vibrations selon la revendication 1, dans lequel ledi circuit (7) de calcul du taux de contribution calcule, comme taux de contribution au point d'évaluation, un rapport d'une valeur moyenne des signaux respectifs de sortie desdits filtres (41 à 47) pendant un temps prédéterminé et de la somme totale des signaux de sortie desdits filtres pendant le temps prédéterminé lorsque la différence devient minimale.

3. Appareil de diagnostic d'un taux de contribution d'une source acoustique ou d'une source de vibrations selon la revendication 1, dans lequel le circuit (7) de calcul du taux de contribution calcule, comme taux de contribution au point d'évaluation, un rapport d'une valeur moyenne au carré des signaux respectifs de sortie desdits filtres (41 à 47) pendant le temps prédéterminé et d'une somme totale des signaux de sortie desdits filtres pendant le temps prédéterminé lorsque la différence devient minimale.

**4.** Appareil de diagnostic d'un taux de contribution d'une source acoustique ou d'une source de vibrations selon la revendication 1, dans lequel la valeur cible ($d_k$) est un signal de sortie d'un autre circuit de conversion analogique-numérique (30) destiné à transformer, en une valeur numérique, une valeur analogique détectée par un capteur supplémentaire (3) de détection de sons ou de vibrations au point d'évaluation sous forme d'une valeur analogique, ou un signal de sortie d'un autre capteur (3) de détection de sons ou de vibrations au point d'évaluation sous forme d'une valeur numérique.

**5.** Appareil de diagnostic d'un taux de contribution d'une source acoustique ou d'une source de vibrations selon la revendication 4, dans lequel la valeur cible ($d_k$) est transmise par un filtre passe-bande (40) destiné à limiter une bande d'analyse de fréquences.

**6.** Appareil de diagnostic d'un taux de contribution d'une source acoustique ou d'une source de vibrations selon la revendication 5, comprenant en outre plusieurs circuits à retard (50 à 57) destinés à compenser le retard dû au passage dans ledit filtre passe-bande (40).

# FIG. 1

# FIG. 2

# FIG. 3

TO CONTRIBUTION-RATE
COMPUTING CIRCUIT UNIT 7

ADF

64

FROM DELAY CIRCUIT

X

FILTER FACTOR

W

TO ADDER CIRCUIT 60

XW

66

FACTOR CHANGING
ALGORITHM

RESIDUAL SIGNAL E

EP 0 671 610 B1

# FIG. 4

## FIG. 5

8: MULTIPLICATION CIRCUIT UNIT

9: CONTRIBUTION-RATE COMPUTING CIRCUIT UNIT

FROM ADAPTIVE-FILTER COMPUTING UNIT 6

TO CONTRIBUTION-RATE DISPLAY UNIT 5

10: COORDINATE TRANSFORMATION CIRCUIT UNIT

$Y_k$

PREDETERMINED TIME i

EP 0 671 610 B1

# FIG. 6

RATE OF CONTRIBUTION

| | |
|---|---|
| **MARK** | |
| lower: | 7.320 Sec |
| | 5629.7 RPM |
| upper: | 7.320 Sec |
| | 5629.7 RPM |

| | |
|---|---|
| ■ch1: | 42.483% |
| ■ch2: | 13.208% |
| ■ch3: | 10.435% |
| ■ch4: | 4.833% |
| ■ch5: | 4.319% |
| ■ch6: | 1.750% |
| ■ch7: | 3.173% |
| err: | 19.799% |

7.320 Sec
5629.7 RPM

EP 0 671 610 B1

# FIG. 7

RATE OF CONTRIBUTION

5629.70 RPM

| | ch.1 | ch.2 | ch.3 | ch.4 | ch.5 | ch.6 | ch.7 | err | desire |
|---|------|------|------|------|------|------|------|-----|--------|
| | 42.483 | 13.208 | 10.435 | 4.8325 | 4.3186 | 1.7497 | 3.1732 | 19.799 | 100.00 |

EP 0 671 610 B1

# FIG. 8

RATE OF CONTRIBUTION

MARK
lower:    0.120 Sec
          3182.1 RPM
upper:    8.400 Sec
          5943.5 RPM

■ch1:      3.688%
■ch2:      2.589%
■ch3:      3.535%
■ch4:      4.586%
■ch5:      1.476%
☐ch6:
☐ch7:
  err:     78.858%

    239.600mSec
    3165.2 RPM

EP 0 671 610 B1

## FIG. 9

RATE OF CONTRIBUTION

ch1:  16.570%
ch2:  19.863%
ch3:  26.493%
ch4:  24.848%
ch5:   2.152%
ch6:   2.817%
ch7:   1.820%
err:   5.437%
      138.216%

6.181 Sec
3505.9 RPM

R.P.M.

FIG. 10

EP 0 671 610 B1

FIG.11